# EUROPEAN PATENT SPECIFICATION

(11) **EP 2 013 504 B1**
(45) Date of publication and mention of the grant of the patent: **07.10.2009**
(21) Application number: 07735381.1
(22) Date of filing: 04.04.2007
(51) Int. Cl.: F16D 51/14

(54) **DRUM BRAKE**
TROMMELBREMSE
FREIN A TAMBOUR

(30) Priority: 05.04.2006 IT TO20060253
(43) Date of publication of application: 14.01.2009
(73) Proprietor: Raicam Industrie S.r.l., 65025 Manoppello Scalo (PE) (IT)
(72) Inventor: MATTIS, Enzo, 10138 Torino (IT)
(74) Representative: Fioravanti, Corrado
(86) International application number: PCT/IB2007/051207
(87) International publication number: WO 2007/113773

(56) References cited:
- GB-A- 933 888
- GB-A- 1 572 744
- US-A1- 2005 205 367

## Description

The invention refers to a drum brake of the type comprising two shoes with friction linings mounted in a slidable manner on a plate along two substantially opposite radial directions between respective facing guide wall pairs, integral with the plate, and driving means which push the shoes against a drum rotor in response to a braking command. Such a brake is for instance disclosed in US-A-2005/0205367.

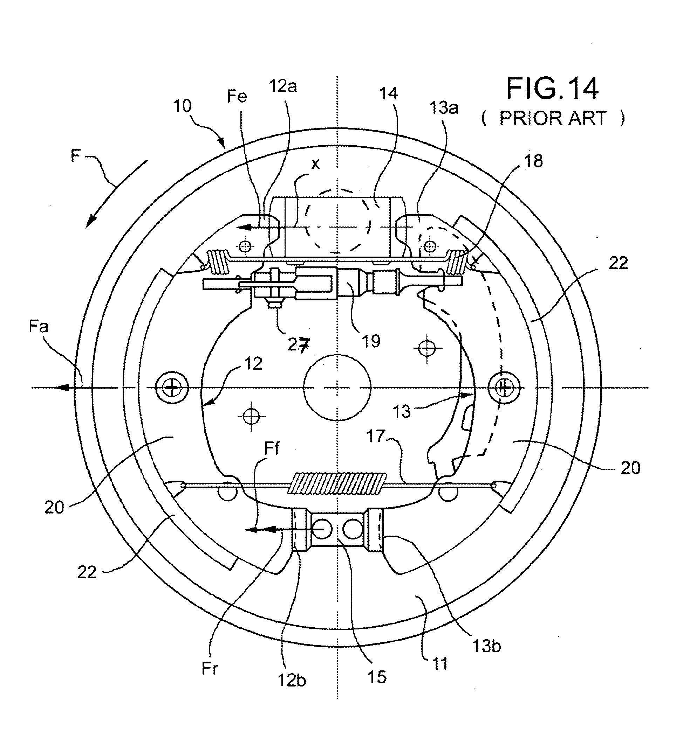

For a better understanding of the state of the art and the problems pertaining thereto, a drum brake of conventional design illustrated in figure 14 will first be described. Referring to figure 14, a drum brake of known type is indicated in its entirety with 10, comprising a disc-shaped plate 11 adapted to be fixed to a suspension arm of a vehicle, a primary brake shoe 12 and a secondary brake shoe 13 having respective ends 12a, 13a between which a driving cylinder 14 is interposed, and second ends 12b, 13b between which a reaction element 15 is interposed, integral with the plate 11. The brake moreover comprises a drum rotor, not shown, integral with the hub of the wheel and which surrounds the shoes 12, 13 with clearance.

Each brake shoe 12, 13 is composed of a rigid support 20 in half-moon shape, a band 21 welded or riveted on the radially outer part of the support 20 and a friction lining 22 applied on the radially outer part of the band 21, the lining being able to come into contact with the drum during braking. The second ends 12b, 13b of the shoes 12, 13 are maintained in abutment at the reaction element 15 by means of a connection spring 17.

The drum brake moreover comprises a return means 18 of the shoes towards the centre of the plate 11, formed in part by two elastic elements and a crossbar 19 arranged parallel to the axis of the driving cylinder 14. Known means 27 for compensating of the lining wear are associated with the crossbar 19. The crossbar 19 is maintained in contact with the shoes 12, 13 by respective retaining springs (not shown).

The driving cylinder 14 is hydraulically controlled by a brake pedal for moving away the first ends 12a, 13a of the shoes, forcing them towards the outer drum.

During braking, with the drum in rotation in the direction indicated with the arrow F, four forces can be distinguished which are applied to each shoe. In brief, only the forces acting on the primary shoe 12 are described here. A first force called entrance force Fe is applied in the contact zone between the cylinder 14 and the first end 12a of the shoe 12, a second force called application force Fa is applied in the contact zone of the lining 22 with the drum, a third force called braking force Ff is applied at the contact point of the second end 12b of the shoe with the reaction element 15 and a fourth force called reaction force Fr is also applied in the contact point of the second end 12b of the shoe with the reaction element 15 (fixed point).

The fact that the braking force Ff, the reaction force Fr are applied in a same point favours the so-called self-locking by the primary shoe's winding on the drum, which causes an early wear of the related lining and renders the braking torque unstable.

It is therefore an object of the present invention to provide an improved drum brake, mainly facing the problem of optimising the distribution of the forces and reactions which occur during braking in order to improve the reliability of the braking and to avoid the above mentioned self-locking.

These and other objects and advantages, which will be better understood below, are attained according to the present invention by a drum brake having the features set forth in the attached claims.

A feew preferred but not limiting embodiments will now be described of a drum brake according to the invention; reference is made to the attached drawings, in which:
Figure 1 is a simplified, partially sectioned elevation view of a drum brake according to the invention;
Figure 2 is an axial section view along line II-II in figure 1;
Figure 3 is an elevation view of a component of the drum brake of figures 1 and 2;
Figure 4 is a section view along line IV-IV in figure 3;
Figure 4A is a view, similar to that of figure 4, of a variant of a detail of the invention;
Figure 5 is a side view of a component of the drum brake, in an alternative embodiment to that of figures 3 and 4;
Figure 6 is a partial elevation view of a drum according to the invention with the component of figure 5, sectioned along line VI-VI in figure 5;
Figures 7-9 illustrate variants of a connecting rod of the brake according to the invention;
Figures 10 and 11 are perspective views of two blocks with friction lining for a brake according to the invention; and
Figures 12 and 13 show an elastic element associable to the component of figure 3; and
Figure 14 is a simplified elevation view of a drum brake of known type.

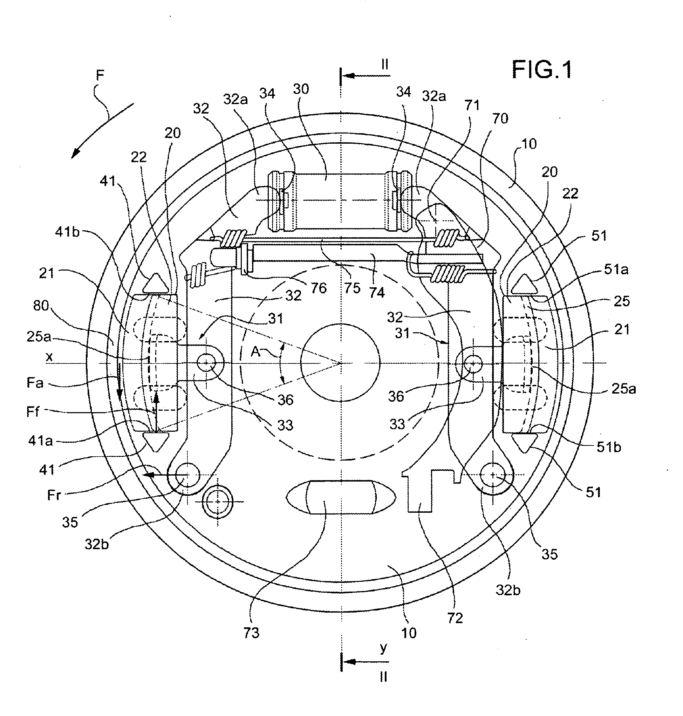

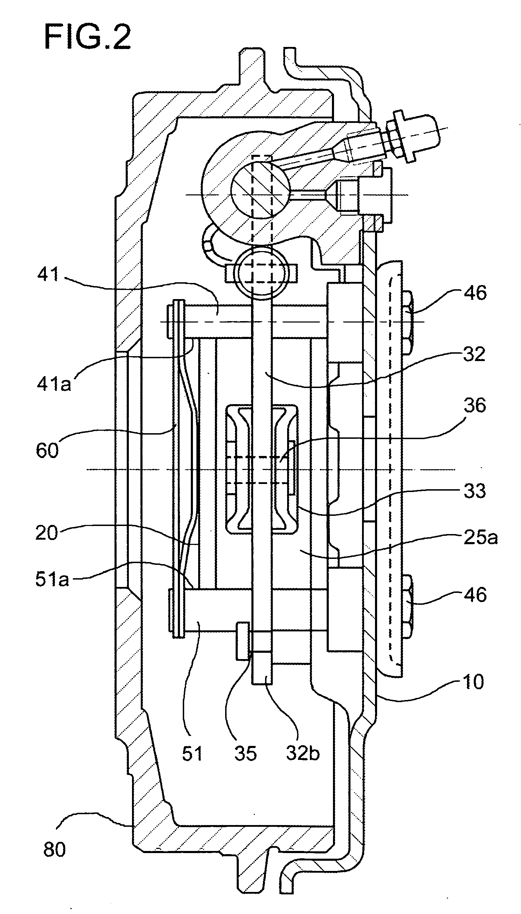

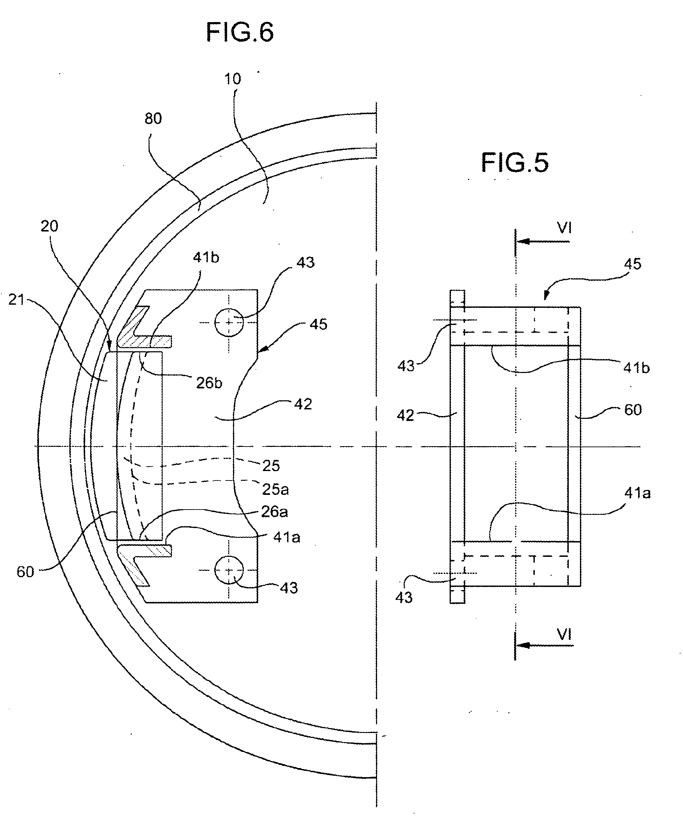

With reference now to figures 1 and 2, a drum brake according to the invention comprises a backing plate 10 fixable to a suspension arm (not illustrated) of a motor vehicle. Two blocks 20, opposite according to a diameter direction X-X, are slidably mounted along this direction between two respective facing guide wall pairs 41a, 41b and 51a, 51b axially projecting from the plate 10. In the example of figures 1-4, the aforesaid guide wall pairs are formed by respective parallel columns 41, 51 whose bases are integral with the plate 10, for example by means of bolts 46 (figure 2), while their ends distant from the plate are rigidly connected to each other by means of a tie-rod 60, whose function will be explained below. Alternatively, as illustrated in figures 5 and 6, a pair of guide walls 41a, 41b can be formed from a body 45 (for example of metal plate) which forms in addition to the aforesaid facing walls also a base 42 with holes 43 for the fixing to the plate 10 and a tie-rod portion 60 which rigidly connects the ends of the walls 41a, 41b distant from the plate 10.

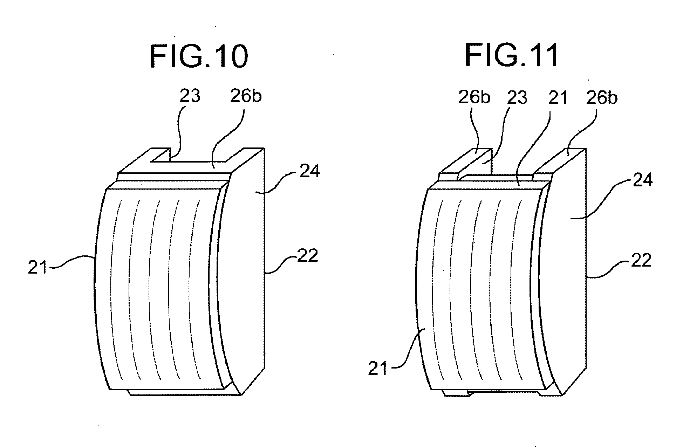

Each block 20 is equipped with a brake lining 21, preferably fixed by moulding or gluing on a respective rigid support 22 formed starting from a metal plate folded as a C so to form a pair of parallel lateral flanges 23, 24 which extend from a radially outer portion 25. This portion is convex and curved with a curvature corresponding to that of a drum 80, illustrated only partially and integral in rotation with the wheel of the vehicle along the direction of arrow F in figure 1. The linings 21 are fixed on external cylindrical surfaces of the curved support portions 25 (figures 1 and 6). The lateral flanges 23, 24 have a pair of opposite parallel surfaces 26a, 26b (figures 10 and 11) adapted to be interposed and radially guided between the guide walls 41a, 41b and 51a, 51b, maintaining a radial translation freedom. Throughout the present description and in the claims, terms and expressions indicating positions and orientations such as "axial", "radial", are intended to refer to the central rotation axis of the drum 80.

The angular extension A of each block 20 can be in the range of 40° - 80°, this numeric example not being limiting. The angular extension A is advantageously less than that of a classic drum brake block, which permits considerably diminishing the volume of the friction lining 21, preserving however a considerably equivalent lifetime. This volume reduction of the lining with regard to a traditional drum brake can reach approximately 60%.

To exert a braking action, forcing the blocks towards the inner cylindrical surface of the drum, a driving group is provided comprising a hydraulic cylinder 30 and a pair of leverages 31 interposed between the hydraulic cylinder and the respective blocks 20. Each leverage comprises a lever 32 and a connecting rod 33. The hydraulic cylinder, when driven, moves a pair of pistons 34 away from one another in opposite directions, the pistons acting on first ends 32a of the levers 32 which have second ends 32b articulated on axial pins 35 integral with the plate 10.

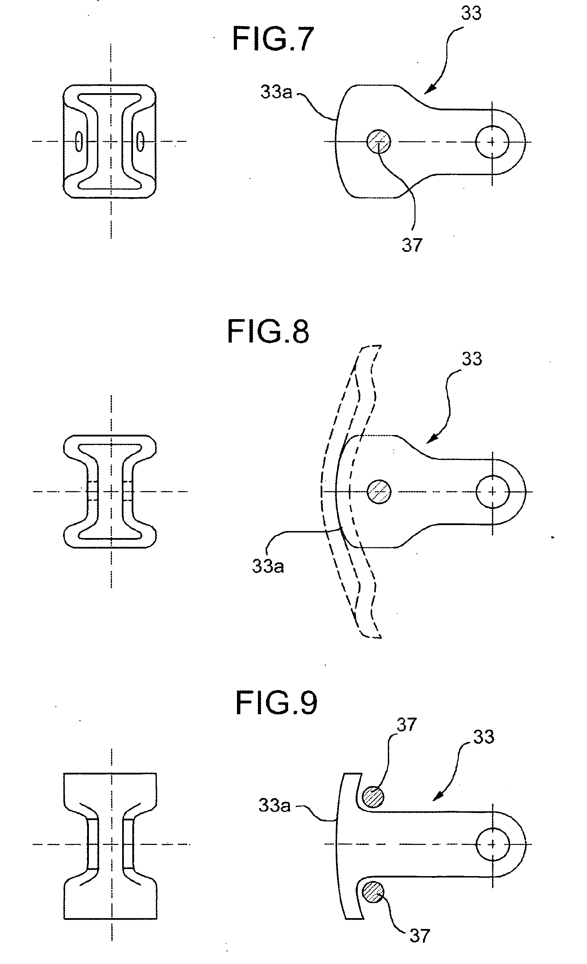

In an intermediate position between the pin 35 articulation points and the contact points with the pistons 34, and preferably in a position comprised halfway between the levers and 1/3 of the distance with respect to the pins 35, each lever 32 has a pin 36 for the articulation of the related connecting rod 33 thrustingly coupled to the related block 20. In the examples illustrated in the drawings, the connecting rods 33 have curved radially outer heads 33a which abut against radially inner surfaces 25a of the curved portions 25 of the supports 22 in order to force the blocks 20 into substantially radial directions. The connecting rods can be bound to the blocks 20 by means of one or more pins 37, as illustrated for example in figures 7 and 9, or with elastic retaining elements (not shown).

A command lever 70 of the hand brake is pivoted about an axis 71 centred on the lever 32 near its end 32a. The end 72 of the lever 70 opposite the axis 71 is folded to facilitate the coupling of a traction cable (not shown) which passes on a guide 73 fixed on the plate 10.

A crossbar 74 is provided between the lever 70 and the two levers 32, 32 for limiting the return stroke of the ends 32a towards each other under the action of a first elastic return means 75 taut between zones close to these ends. The crossbar 74 is preferably associated to an automatic wear compensating device 76 of the brake lining adapted to automatically modify the length of the crossbar itself in order to compensate the wear of the brake lining.

Operation of the drum brake of figures 1 and 2 is described herein after. It is assumed that the drum 80 turns in the direction of the arrow F. By driving the brakes, liquid under pressure is sent into the cylinder 30 between the pistons 34, which move away from each other, pushing the ends 32a of the levers 32. These levers respectively rotate on the pins 35 and exert a predominantly radial thrust by means of the connecting rods 33 against the supports 22 of the associated blocks. Each block slides radially between the respective guide wall pairs 41a, 41b, 51, 51b and comes into abutment against the inner surface of the drum 80 to perform the braking.

A reaction of friction acting on the lining 21 applied on the outlet edge, in the direction of the arrow F, pushes the supports 22 in abutment against the guide walls 41a and 51a, respectively. The block 22 then applies a braking force Ff against the guide wall 41a, in the direction of the arrow Ff. A reaction force Fr is then applied along the arrow Fr on the end 32b of the lever 32 against the pin 35. Consequently, the braking force Ff and the reaction force Fr are applied in two separate points, considerably increasing the stability of the braking torque.

Due to the lever 32, and according to the distance of the pin 36 from the fixed pin 35, the force applied by the piston 34 to the end 32a of the lever 32 is doubled or tripled at the level of the pins 36 and support surfaces 25a of the connecting rods 33 against the blocks 20. The compression work of the two blocks permits reducing the volume of the friction material with respect to a classic drum brake in which one of the blocks is compressed and the other is drawn or taut.

According to the invention, the forces are better divided on the plate 10 and the stability of the braking torque is improved due above all to the fact that the facing guide walls 41a, 41b and 51a, 51b of each pair are rigidly connected to each other at their ends distant from the plate 10, by means of the respective tie-rod 60 capable of transferring part of the braking forces Ff from the wall 41a, 51a arranged downstream (considering the rotation direction of the braking wheel) to the wall 41b, 51b arranged upstream.

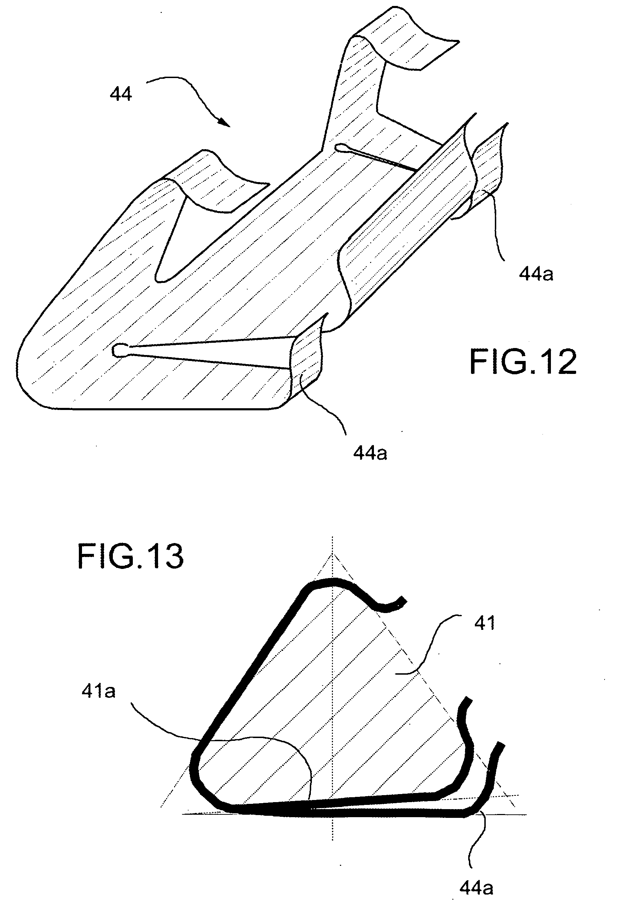

With reference to figures 12 and 13, an elastic element is indicated with the number 44 which is adapted to be snap-mounted (or fixed in another manner) on one of the columns 41; the elastic element has one or more flexible portions 44a adapted to elastically force the block 20 towards the opposite column which has the other guide surface 41b, in order to cancel tangential clearances between the blocks and the surfaces 41a and 41b (or 51a and 51b) which could generate noise due to the vibrations to which the vehicle is subjected.

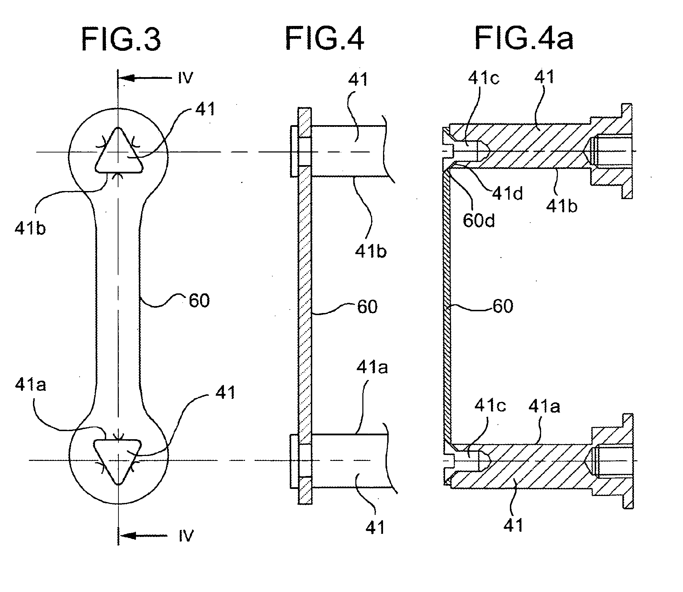

In the example of figure 4A, the tie-rod 60 is fixed to the free ends of the columns 41 by means of conical head screws 41c which engage in conical seats 41d and 60d formed on the columns 41 and through the tie-rod 60. This arrangement yields a centring action that guarantees an accurate distance between the facing walls 41a, 41b and 51a, 51b for guiding the blocks accurately.

It is intended that the invention is not limited to the embodiments described and illustrated here, which are to be considered as embodiments of the drum brake. Rather, the invention is susceptible to modifications related to shape and arrangement of parts, structural and operational details, as well as employed materials, as will be apparent to those skilled in the art.

## Claims

1. A drum brake comprising two blocks (20) with friction linings (21) mounted in a slidable manner on a plate (10) along two substantially opposite radial directions between respective facing guide wall (41a, 51a; 41b; 51b) pairs, integral with the plate (10), driving means for urging the blocks (20) against a drum rotor (80) in response to a braking command, **characterised in that** the guide walls (41a, 51a; 41b; 51b) of each pair are rigidly connected to each other by a respective tie-rod (60).

2. The drum brake of claim 1, wherein the guide walls (41a, 51a; 41b; 51b) each have a base portion fixed to or integral with the plate (10) and an end portion spaced from the plate, **characterised in that** the tie-rods (60) rigidly connect the guide walls of each end pair at said end portions.

3. The drum brake of claim 1, **characterised in that** each facing guide wall pair and the related tie-rod which connects them are formed from a single rigid body (45).

4. The drum brake of claim 3, **characterised in that** the rigid body (45) is made of metal plate.

5. The drum brake of claim 3, **characterised in that** the rigid body (45) moreover forms a base provided with means or seats for the fixing to the plate.

6. The drum brake of claim 1, **characterised in that** the driving means comprise, for each block (20), a leverage (31) interposed between a hydraulic cylinder (30) and the respective block (20), wherein the leverage includes
- a lever (32) having a first end (32a) engaged with the hydraulic cylinder (30) and a second end (32b) hinged to a pin (35) integral with the plate (10),
- a connecting rod (33) articulated to the lever (32) in an intermediate point (36) between said ends (32a, 32b) and thrustingly associated against a wall (25a) of the block (20) facing a radially inward direction.

7. The drum brake of claim 6, **characterised in that** the connecting rods (33) have curved radially outer end portions (33a) which abut against curved radially inner surfaces (25a) of the blocks (20).

8. The drum brake of claim 6, **characterised in that** the articulation point (36) is situated at a distance from the pin (35) which is not greater than half the distance between the ends (32a, 32b) of the lever.

9. The drum brake of any one of the preceding claims, **characterised in that** each block (20) comprises a respective rigid support (22) formed starting from a metal plate folded as a C so to form a pair of parallel lateral flanges (23, 24) having a pair of opposite parallel surfaces (26a, 26b) adapted to be interposed and radially guided between the guide walls (41a, 41b, 51a, 51b).

10. The drum brake of claims 6 and 9, **characterised in that** each block (20) comprises a radially outer portion (25) which is curved and convex in a radially outward direction and adapted to be thrustingly forced by a respective connecting rod (33).

11. The drum brake of any one of the preceding claims, **characterised in that** at at least one (41a) of the guide walls of each guide wall pair an element (44) is associated which is adapted to elastically force the block (20) towards the opposite guide wall (41b).

12. The drum brake of claim 2, **characterised in that** the tie-rods (60) are connected to the guide walls by means of conical head screws engaging in conical seats formed through the tie-rods and in columns integral with said guiding walls.

## Patentansprüche

1. Trommelbremse mit zwei Blöcken (20) mit Reibbelägen (21), die in einer verschiebbaren Weise an einer Platte (10) entlang zwei im Wesentlichen entgegengesetzten radialen Richtungen zwischen jeweiligen einander zugewandten Führungswand- (41a, 51a; 41b; 51b) Paaren, die mit der Platte (10) einteilig sind, angebracht sind, einer Antriebseinrichtung zum Drücken der Blöcke (20) gegen einen Trommelrotor (80) in Reaktion auf einen Bremsbefehl, **dadurch gekennzeichnet, dass** die Führungswände (41a, 51a; 41b; 51b) von jedem Paar durch eine jeweilige Spannstange (60) starr miteinander verbunden sind.

2. Trommelbremse nach Anspruch 1, wobei die Führungswände (41a, 51a; 41b; 51b) jeweils einen Basisteil, der an der Platte (10) befestigt ist oder mit dieser einteilig ist, und einen Endteil, der von der Platte beabstandet ist, aufweisen, **dadurch gekennzeichnet, dass** die Spannstangen (60) die Führungswände von jedem Endpaar an den Endteilen starr verbinden.

3. Trommelbremse nach Anspruch 1, **dadurch gekennzeichnet, dass** jedes einander zugewandte Führungswandpaar und die zugehörigen Spannstangen, die sie verbinden, aus einem einzelnen starren Körper (45) ausgebildet sind.

4. Trommelbremse nach Anspruch 3, **dadurch gekennzeichnet, dass** der starre Körper (45) aus einer Metallplatte besteht.

5. Trommelbremse nach Anspruch 3, **dadurch gekennzeichnet, dass** der starre Körper (45) überdies eine Basis bildet, die mit Einrichtungen oder Sitzen für die Befestigung an der Platte versehen ist.

6. Trommelbremse nach Anspruch 1, **dadurch gekennzeichnet, dass** die Antriebseinrichtung für jeden Block (20) ein Gestänge (31) umfasst, das zwischen einen Hydraulikzylinder (30) und den jeweiligen Block (20) eingefügt ist, wobei das Gestänge umfasst
- einen Hebel (32) mit einem ersten Ende (32a), das mit dem Hydraulikzylinder (30) in Eingriff steht, und einem zweiten Ende (32b), das an einem Bolzen (35), der mit der Platte (10) einteilig ist, gelenkig gelagert ist,
- eine Verbindungsstange (33), die am Hebel (32) an einem Zwischenpunkt (36) zwischen den Enden (32a, 32b) gelenkig gelagert ist und gegen eine Wand (25a) des Blocks (20) schiebend angegliedert ist, welche in eine radial innere Richtung gewandt ist.

7. Trommelbremse nach Anspruch 6, **dadurch gekennzeichnet, dass** die Verbindungsstangen (33) gekrümmte radial äußere Endteile (33a) aufweisen, die an gekrümmten radial inneren Oberflächen (25a) der Blöcke (20) anliegen.

8. Trommelbremse nach Anspruch 6, **dadurch gekennzeichnet, dass** der Gelenkpunkt (36) in einem Abstand vom Bolzen (35) liegt, der nicht größer ist als die Hälfte des Abstandes zwischen den Enden (32a, 32b) des Hebels.

9. Trommelbremse nach einem der vorangehenden Ansprüche, **dadurch gekennzeichnet, dass** jeder Block (20) einen jeweiligen starren Träger (22) umfasst, der ausgehend von einer Metallplatte ausgebildet wird, die als C gefaltet wird, um ein Paar von parallelen seitlichen Flanschen (23, 24) mit einem Paar von entgegengesetzten parallelen Oberflächen (26a, 26b) auszubilden, die so ausgelegt sind, dass sie zwischen die Führungswände (41a, 41 b, 51 a, 51 b) eingefügt und zwischen ihnen radial geführt werden.

10. Trommelbremse nach den Ansprüchen 6 und 9, **dadurch gekennzeichnet, dass** jeder Block (20) einen radial äußeren Teil (25) umfasst, der in einer radial äußeren Richtung gekrümmt und konvex ist und dazu ausgelegt ist, durch eine jeweilige Verbindungsstange (33) schiebend gedrückt zu werden.

11. Trommelbremse nach einem der vorangehenden Ansprüche, **dadurch gekennzeichnet, dass** mindestens einer (41 a) der Führungswände von jedem Führungswandpaar ein Element (44) zugeordnet ist, das dazu ausgelegt ist, den Block (20) elastisch in Richtung der entgegengesetzten Führungswand (41 b) zu drücken.

12. Trommelbremse nach Anspruch 2, **dadurch gekennzeichnet, dass** die Spannstangen (60) mit den Führungswänden mittels Kegelkopfschrauben verbunden sind, die mit konischen Sitzen in Eingriff stehen, die durch die Spannstangen hindurch und in Säulen, die mit den Führungswänden einteilig sind, ausgebildet sind.

## Revendications

1. Frein à tambour comprenant deux blocs (20) avec des garnitures de friction (21) montés d'une manière coulissante sur une plaque (10) le long de deux directions radiales sensiblement opposées entre des paires de parois de guidage respectives en vis-à-vis (41a, 51a ; 41b ; 51b), intégrales avec la plaque (10), des moyens d'entraînement pour forcer les blocs (20) contre un rotor de tambour (80) en réponse à un ordre de freinage, **caractérisé en ce que** les parois de guidage (41a, 51a ; 41b ; 51b) de chaque paire sont rigidement connectées l'une à l'autre par un barreau de maintien respectif (60).

2. Frein à tambour selon la revendication 1, dans lequel les parois de guidage (41a, 51a ; 41b ; 51b) ont chacune une portion de base fixée à la plaque (10) ou intégrale avec celle-ci, et une portion terminale espacée vis-à-vis de la plaque, **caractérisé en ce que** les barreaux de maintien (60) connectent rigidement les parois de guidage de chaque paire terminale au niveau desdites portions terminales.

3. Frein à tambour selon la revendication 1, **caractérisé en ce que** chaque paire de parois de guidage en vis-à-vis et le barreau de maintien concerné qui les connecte sont formés à partir d'un corps rigide unique (45).

4. Frein à tambour selon la revendication 3, **caractérisé en ce que** le corps rigide (45) est réalisé d'une plaque métallique.

5. Frein à tambour selon la revendication 3, **caractérisé en ce que** le corps rigide (45) forme en outre une base dotée de moyens ou de sièges pour la fixation sur la plaque.

6. Frein à tambour selon la revendication 1, **caractérisé en ce que** les moyens d'entraînement comprennent, pour chaque bloc (20), un système à leviers (31) interposé entre un cylindre hydraulique (30) et le bloc respectif (20), dans lequel le système à leviers inclut
- un levier (32) ayant une première extrémité (32a) engagée avec le cylindre hydraulique (30) et une seconde extrémité (32b) articulée sur une tige (35) intégrale avec la plaque (10),
- un barreau de connexion (33) articulé sur le levier (32) en un point intermédiaire (36) entre lesdites extrémités (32a, 32b) et associé en termes de poussée contre une paroi (25a) du bloc (20) et tourné vers une direction radialement intérieure.

7. Frein à tambour selon la revendication 6, **caractérisé en ce que** les barreaux de connexion (33) possèdent des portions terminales radialement extérieures incurvées (33a) qui viennent buter contre les surfaces radialement intérieures incurvées (25a) des blocs (20).

8. Frein à tambour selon la revendication 6, **caractérisé en ce que** le point d'articulation (36) est situé à une distance de la tige (35) qui n'est pas supérieure à la moitié de la distance entre les extrémités (32a, 32b) du levier.

9. Frein à tambour selon l'une quelconque des revendications précédentes, **caractérisé en ce que** chaque bloc (20) comprend un support rigide respectif (22) formé en partant d'une plaque métallique repliée sous la forme d'un C pour former une paire de brides latérales parallèles (23, 24) ayant une paire de surfaces parallèles opposées (26a, 26b) adaptées à être interposées et guidées radialement entre les parois de guidage (41a, 41b, 51a, 51b).

10. Frein à tambour selon les revendications 6 et 9, **caractérisé en ce que** chaque bloc (20) comprend une portion radialement extérieure (25) qui est incurvée et convexe dans une direction radialement vers l'extérieur, et adaptée à être forcée en termes de poussée par un barreau de connexion respectif (33).

11. Frein à tambour selon l'une quelconque des revendications précédentes, **caractérisé en ce que** l'une au moins (41a) des parois de guidage de chaque paire de parois de guidage est associée à un élément (44) qui est adapté à forcer élastiquement le bloc (20) vers la paroi de guidage opposé (41b).

12. Frein à tambour selon la revendication 2, **caractérisé en ce que** les barreaux de liaison (60) sont connectés aux parois de guidage au moyen de vis à tête conique qui engagent des sièges coniques formés à travers les barreaux de liaison et en colonnes, de manière intégrale avec lesdites parois de guidage.
